# EUROPEAN PATENT APPLICATION

(11) **EP 4 704 074 A1**
(43) Date of publication of application: **04.03.2026**
(21) Application number: 24795551.1
(22) Date of filing: 21.02.2024
(51) Int. Cl.: G10K 11/178

(54) **ACTIVE NOISE REDUCTION SYSTEM, METHOD AND DEVICE FOR VEHICLE, CONTROLLER, AND STORAGE MEDIUM**

(30) Priority: 28.04.2023 CN 202310479154
(71) Applicant: Chongqing Changan Automobile Co., Ltd., Chongqing 400023 (CN)
(72) Inventor: XIE, Can, Chongqing 400023 (CN); LIAO, Xiangning, Chongqing 400023 (CN); WANG, Hui, Chongqing 400023 (CN)
(74) Representative: Barker Brettell LLP
(86) International application number: PCT/CN2024/077867
(87) International publication number: WO 2024/222163

(57) **Abstract**

Provided are an active noise reduction system, method and apparatus inside a vehicle, a controller, and a storage medium. In the active noise reduction system inside the vehicle, a noise reduction reference signal collection module (11) is configured to collect a noise reduction reference signal of a noise excitation source inside the vehicle; an error microphone array (12) is configured to collect an error microphone signal of a target noise reduction area; a distance collection module (13) is configured to collect relative position information, where the relative position information is used to determine distance information of a secondary channel; an environmental collection module (14) is configured to collect environmental information inside the vehicle; a controller (15) is configured to generate a speaker excitation signal based on the noise reduction reference signal, the error microphone signal, the distance information, and the environmental information, and output the speaker excitation signal. In the active noise reduction system and method, the speaker excitation signal that is adapted to a current state inside the vehicle is generated based on a real-time distance of the secondary channel inside the vehicle and the environmental information inside the vehicle, so as to better cancel out the noise inside the vehicle, improve the noise reduction effect and the system robustness.

## Description

This application claims priority to Chinese Patent Application No. 2023104791542, filed with the China National Intellectual Property Administration on April 28, 2023 and entitled "ACTIVE NOISE REDUCTION SYSTEM, METHOD AND APPARATUS INSIDE VEHICLE, CONTROLLER, AND STORAGE MEDIUM", which is hereby incorporated by reference in its entirety.

### TECHNICAL FIELD

The present application relates to a field of active control of noise inside a vehicle and, in particular, to an active noise reduction system, method and apparatus inside a vehicle, a controller, and a storage medium.

### BACKGROUND

With the continuous improvement of living standards, people's requirements for car driving comfort are also constantly increasing. As one of the factors affecting driving comfort, traditional control methods mostly eliminate noise through passive methods such as sound absorption, sound insulation, and vibration isolation, etc. These methods are effective for high-frequency noise inside the vehicle, but have limited effectiveness in eliminating low-frequency noise. With the advent of the era of intelligent vehicles, an active noise control (Active Noise Control, ANC) technology has made significant progress in the field of elimination of noise inside the vehicle, and many vehicle brands have begun to apply this technology to eliminate low-frequency noise inside the vehicle.

However, the current method of using the ANC technology to eliminate the noise inside the vehicle has poor noise reduction effect and poor stability.

### SUMMARY

In order to solve the above technical problem or at least partially solve the above technical problem, the present application provides an active noise reduction system, method and apparatus inside a vehicle, a controller, and a storage medium.

In a first aspect, the present application provides an active noise reduction system inside a vehicle, including: a noise reduction reference signal collection module, an error microphone array, a distance collection module, an environmental collection module, and a controller;
the noise reduction reference signal collection module is configured to collect a noise reduction reference signal of a noise excitation source inside the vehicle;
the error microphone array is configured to collect an error microphone signal of a target noise reduction area;
the distance collection module is configured to collect relative position information, where the relative position information is used to determine distance information of a secondary channel;
the environmental collection module is configured to collect environmental information inside the vehicle;
the controller is configured to generate a speaker excitation signal based on the noise reduction reference signal, the error microphone signal, the distance information, and the environmental information, and output the speaker excitation signal.

Optionally, the environmental collection module includes: a temperature sensor and a humidity sensor;
the temperature sensor is configured to collect temperature information inside the vehicle;
the humidity sensor is configured to collect humidity information inside the vehicle.

Optionally, the distance collection module is further configured to collect a movement distance of a seat towards a front of the vehicle, a movement distance of the seat towards a roof of the vehicle, and an angle of a seat back as the relative position information;
the controller is further configured to determine the distance information of the secondary channel based on the movement distance of the seat towards the front of the vehicle, the movement distance of the seat towards the roof of the vehicle, and the angle of the seat back.

Optionally, the controller is further configured to obtain current vehicle status information from a CAN bus.

In a second aspect, the present application provides an active noise reduction method inside a vehicle, including:
obtaining relative position information and environmental information inside the vehicle, where the relative position information is used to determine distance information of a secondary channel;
obtaining a noise reduction reference signal of a noise excitation source inside the vehicle and an error microphone signal of a target noise reduction area; and
generating a speaker excitation signal based on the noise reduction reference signal, the error microphone signal, the distance information, and the environmental information, and outputting the speaker excitation signal.

Optionally, the generating the speaker excitation signal based on the noise reduction reference signal, the error microphone signal, the distance information, and the environmental information includes:
determining a target filter coefficient based on the distance information and the environmental information; and
processing the noise reduction reference signal and the error microphone signal based on the target filter coefficient to obtain the speaker excitation signal, and outputting the speaker excitation signal.

Optionally, the determining the target filter coefficient based on the distance information and the environmental information includes:
determining temperature information and humidity information based on the environmental information; and
determining the target filter coefficient based on the distance information, the temperature information, and the humidity information.

Optionally, the determining the target filter coefficient based on the distance information, the temperature information, and the humidity information includes:
determining a preset distance data range corresponding to the distance information;
determining a preset temperature data range corresponding to the temperature information;
determining a preset humidity data range corresponding to the humidity information; and
determining a filter coefficient corresponding to the preset distance data range, the preset temperature data range, and the preset humidity data range as the target filter coefficient.

Optionally, the method further includes:
obtaining current vehicle status information; and
if the vehicle status information satisfies a noise reduction triggering condition, performing the step of obtaining the relative position information and the environmental information inside the vehicle;
the processing the noise reduction reference signal and the error microphone signal based on the target filter coefficient to obtain the speaker excitation signal includes:
   inputting the vehicle status information into an active noise reduction algorithm; and
   processing the noise reduction reference signal and the error microphone signal based on the active noise reduction algorithm and the target filter coefficient to obtain the speaker excitation signal.

Optionally, the method further includes:
obtaining a movement distance of a seat towards a front of the vehicle, a movement distance of the seat towards a roof of the vehicle, and an angle of a seat back as the relative position information; and
determining the distance information of the secondary channel based on the movement distance of the seat towards the front of the vehicle, the movement distance of the seat towards the roof of the vehicle, and the angle of the seat back.

In a third aspect, the present application provides an active noise reduction apparatus inside a vehicle, including:
a first obtaining module, configured to obtain relative position information and environmental information inside the vehicle, where the relative position information is used to determine distance information of a secondary channel;
a second obtaining module, configured to obtain a noise reduction reference signal of a noise excitation source inside the vehicle and an error microphone signal of a target noise reduction area; and
a first generating module, configured to generate a speaker excitation signal based on the noise reduction reference signal, the error microphone signal, the distance information, and the environmental information, and output the speaker excitation signal.

Optionally, the first generating module includes:
a first determining unit, configured to determine a target filter coefficient based on the distance information and the environmental information; and
a first processing unit, configured to process the noise reduction reference signal and the error microphone signal based on the target filter coefficient to obtain the speaker excitation signal, and output the speaker excitation signal.

Optionally, the first determining unit includes:
a first determining subunit, configured to determine temperature information and humidity information based on the environmental information; and
a second determining subunit, configured to determine the target filter coefficient based on the distance information, the temperature information, and the humidity information.

Optionally, the second determining subunit includes:
determining a preset distance data range corresponding to the distance information;
determining a preset temperature data range corresponding to the temperature information;
determining a preset humidity data range corresponding to the humidity information; and
determining a filter coefficient corresponding to the preset distance data range, the preset temperature data range, and the preset humidity data range as the target filter coefficient.

Optionally, the apparatus further includes:
a third obtaining module, configured to obtain current vehicle status information; and
a performing module, configured to, if the vehicle status information satisfies a noise reduction triggering condition, perform the step of obtaining the relative position information and the environmental information inside the vehicle;
the first processing unit includes:
   an input subunit, configured to input the vehicle status information into an active noise reduction algorithm; and
   a processing subunit, configured to process the noise reduction reference signal and the error microphone signal based on the active noise reduction algorithm and the target filter coefficient to obtain the speaker excitation signal.

Optionally, the apparatus further includes:
a fourth obtaining module, configured to obtain a movement distance of a seat towards a front of the vehicle, a movement distance of the seat towards a roof of the vehicle, and an angle of a seat back as the relative position information; and
a determining module, configured to determine the distance information of the secondary channel based on the movement distance of the seat towards the front of the vehicle, the movement distance of the seat towards the roof of the vehicle, and the angle of the seat back.

In a fourth aspect, the present application provides a controller, including a processor, a communication interface, a memory, and a communication bus, where the processor, the communication interface, and the memory communicate with each other through the communication bus;
the memory is configured to store computer programs;
the processor is configured to, when executing the programs stored in the memory, implement any one of the active noise reduction method inside the vehicle as described in the second aspect.

In a fifth aspect, the present application provides a computer-readable storage medium, storing programs for an active noise reduction method inside a vehicle which, when executed by a processor, implements the steps of any of the active noise reduction method inside the vehicle as described in the second aspect.

The present application further provides a computer program product, including computer programs which, when executed by a processor, implement the steps of any of the active noise reduction method inside the vehicle as described above.

The above technical solution provided by embodiments of the present application has the following advantages compared to the prior art.

The embodiment of the present application can determine the distance of the secondary channel and the environmental information inside the vehicle through the distance collection module and the environmental collection module; generate the speaker excitation signal based on the distance of the secondary channel and the environmental information, and output the speaker excitation signal, which realize the generation of the speaker excitation signal that is adapted to a current state inside the vehicle based on a real-time distance of the secondary channel inside the vehicle and the environmental information inside the vehicle, so as to better cancel out the noise inside the vehicle, avoid the situation where the noise reduction effect decreases and the noise reduction effect is unstable due to changes in the distance of the secondary channel and changes in the environment such as temperature and humidity inside the vehicle, and improve the noise reduction effect and the system robustness.

### BRIEF DESCRIPTION OF DRAWINGS

The accompanying drawings are incorporated into the specification and form a part of the specification, illustrating embodiments in accordance with the present application and used together with the specification to explain the principles of the present application.

In order to provide a clearer explanation of the technical solutions in embodiments of the present application or the prior art, the following will provide a brief introduction to the accompanying drawings required for the embodiments or the description of the prior art. It is evident that for those skilled in the art, other accompanying drawings can be obtained based on these accompanying drawings without making creative efforts.
FIG. 1 is a structural diagram of an active noise reduction system inside a vehicle provided in an embodiment of the present application.
FIG. 2 is a flowchart of an active noise reduction method inside a vehicle provided in an embodiment of the present application.
FIG. 3 is a structural diagram of an active noise reduction system inside a vehicle in a practical application provided in an embodiment of the present application.
FIG. 4 is a schematic diagram of seat movement provided in an embodiment of the present application.
FIG. 5 is a flowchart of an active noise reduction method inside a vehicle in a practical application provided in an embodiment of the present application.
FIG. 6 is a schematic comparison diagram of a second-order noise reduction effect of different active noise reduction methods inside a vehicle for a certain fuel vehicle provided in an embodiment of the present application.
FIG. 7 is a structural diagram of an active noise reduction apparatus inside a vehicle provided in an embodiment of the present application.
FIG. 8 is a structural diagram of an electronic device provided in an embodiment of the present application.

11-noise reduction reference signal collection module, 12-error microphone array, 13-distance collection module, 14-environmental collection module, 15-controller, 16-temperature sensor, 17-humidity sensor, 18-speaker array, 21 first obtaining module, 22-second obtaining module, and 23-first generating module.

### DESCRIPTION OF EMBODIMENTS

In order to clarify the purpose, technical solution, and advantages of embodiments of the present application, the following will provide a clear and complete description of the technical solution in embodiments of the present application in conjunction with the accompanying drawings. Obviously, the described embodiments are a part of the embodiments of the present application, not all of them. Based on the embodiments in the present application, all other embodiments obtained by those of ordinary skilled in the art without creative labor are within the protection scope of the present application n.

The ANC technology mainly uses the principle of sound interference to reduce noise, a speaker generates a sound signal with the same frequency and amplitude as an original noise, but with a phase difference of 180 °, a sound field is superposed in a target area to cancel out the original noise, so as to achieve the noise reduction effect. The existing ANC system mainly contains three parts: a signal input, a controller, and a signal output.

The signal input part mainly obtains a noise reference signal inside the vehicle and operating condition information of the vehicle through a noise reduction reference signal collection module and a controller area network (Controller Area Network, CAN) bus, and collects a noise signal of a target area in real time through the error microphone array. The controller part processes an input signal, runs an active noise reduction algorithm, and outputs a speaker excitation signal. The output part mainly uses an in-vehicle speaker to play a canceling sound wave signal, and then transmits the canceling sound wave signal to the target area to cancel out the original noise signal, achieving noise reduction effect.

A secondary channel refers to a physical path between a speaker array and an error microphone array in the ANC system, an output sound wave needs to pass through this path to cancel out the original noise signal. The ANC technology typically performs offline testing on a transfer function of the secondary channel, converts it into a filter coefficient for storage in the ANC controller. Then, the reference signal is filtered to cancel out a phase shift generated by the speaker excitation signal passing through the secondary sound channel, improving the noise reduction effect.

However, when using the ANC technology to eliminate the noise inside the vehicle, the inventor found that the existing noise reduction method based on the ANC technology has poor noise reduction effect and poor stability. Therefore, embodiments of the present application provide an active noise reduction system, method and apparatus inside a vehicle, a controller, and a storage medium.

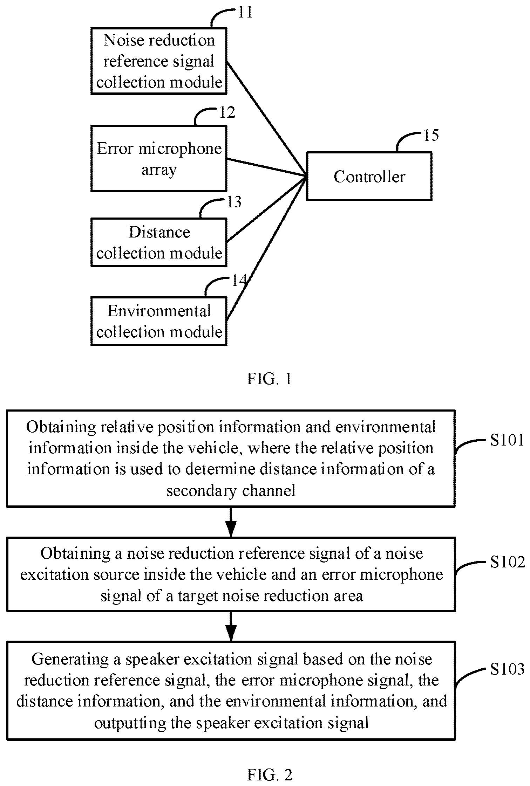

As shown in FIG. 1, the active noise reduction system inside a vehicle provided in an embodiment of the present application includes: a noise reduction reference signal collection module 11, an error microphone array 12, a distance collection module 13, an environmental collection module 14, and a controller 15.

The noise reduction reference signal collection module 11 is configured to collect a noise reduction reference signal of a noise excitation source inside the vehicle.

In an embodiment of the present application, the noise excitation source inside the vehicle includes road noise (also known as tire noise) and/or engine noise, etc. The noise reduction reference signal collection module 11 includes a road noise sensor and/or an engine noise sensor, etc. Correspondingly, the noise reduction reference signal includes a noise reduction reference signal of road noise and/or engine noise.

The error microphone array 12 is configured to collect an error microphone signal of a target noise reduction area.

In an embodiment of the present application, in order to improve the noise reduction effect of the system, an error microphone can be placed on a seat near human ears, such as at a headrest of a seat back.

The distance collection module 13 is configured to collect relative position information, where the relative position information is used to determine distance information of a secondary channel.

The distance collection module 13 includes a distance sensor, such as a Hall sensor, and the distance collection module 13 is configured to provide distance information between a speaker and the error microphone array 12 for the system.

In an implementation of the present application, the distance collection module 13 is further configured to collect a movement distance of a seat towards a front of the vehicle, a movement distance of the seat towards a roof of the vehicle, and an angle of a seat back as the relative position information.

The controller 15 is further configured to determine the distance information of the secondary channel based on the movement distance of the seat towards the front of the vehicle, the movement distance of the seat towards the roof of the vehicle, and the angle of the seat back.

The environmental collection module 14 is configured to collect environmental information inside the vehicle.

The environmental information refers to temperature and humidity information inside the vehicle, that is, the environmental information includes temperature information and humidity information for real-time updating of the filter coefficient.

In an implementation of the present application, the environmental collection module includes: a temperature sensor and a humidity sensor. The temperature sensor is configured to collect temperature information inside the vehicle. The humidity sensor is configured to collect humidity information inside the vehicle.

The controller 15 is configured to generate a speaker excitation signal based on the noise reduction reference signal, the error microphone signal, the distance information, and the environmental information, and output the speaker excitation signal.

Furthermore, the controller 15 determines a target filter coefficient based on the distance information and the environmental information, processes the noise reduction reference signal and the error microphone signal based on the target filter coefficient to obtain the speaker excitation signal, and outputs the speaker excitation signal.

In an embodiment of the present application, the controller 15 mainly includes a control algorithm, a DSP chip, a digital-to-analog converter, etc. After an input signal is converted into a digital signal by the digital-to-analog converter, the DSP chip first distinguishes signals collected by the distance collection module 13 and the environmental collection module 14, and selects a filter coefficient saved under a corresponding parameter combination, then, runs the control algorithm to process the noise reduction reference signal and the error microphone signal, so as to generate the speaker excitation signal, and pass it through the digital-to-analog converter to the signal output part.

The output part mainly includes the speaker and a power amplifier. The output part outputs the noise reduction sound wave of the system, which is superimposed with the original noise signal in the target area to complete the noise reduction process.

In an implementation of the present application, the controller 15 is further configured to obtain current vehicle status information from a CAN bus.

The CAN bus provides the system with a vehicle operating condition parameter, such as engine speed, vehicle speed, accelerator pedal position, gear, window lifting, door opening and closing, etc. Therefore, the vehicle status information includes engine speed, vehicle speed, accelerator pedal position, gear, vehicle window lifting, vehicle door opening and closing, and other information.

Obtaining the vehicle status information can be used to determine whether to turn on the active noise reduction inside the vehicle. For example, the active noise reduction inside the vehicle can be turned off when a window is open and/or a door is open, and the active noise reduction inside the vehicle can be turned on when the window is closed and/or the door is closed.

The inventor found in the process of implementing the present application that during the operation of the ANC system, changes in factors such as the error microphone position, the temperature and humidity inside the vehicle may cause changes in the transfer function of the secondary channel, resulting in a mismatch between the filter coefficient in the ANC controller and the real-time transfer function, which may result in a decrease and instability of the noise reduction effect. Therefore, an embodiment of the present application identifies a state inside the vehicle in real-time through the distance of the secondary channel, the temperature, and humidity information, and then selects the corresponding transfer function of the secondary channel to convert it into the target filter coefficient, achieving real-time automatic updating of the target filter coefficient following changes in the distance of the secondary channel and the environmental information inside the vehicle, adapting to changes in the transfer function of the secondary channel inside the vehicle, and the controller performs noise reduction processing based on the target filter coefficient to improve the noise reduction effect and the system robustness.

The embodiment of the present application can determine the distance of the secondary channel and the environmental information inside the vehicle through the distance collection module and the environmental collection module; generate the speaker excitation signal based on the distance of the secondary channel and the environmental information, and output the speaker excitation signal, which realize the generation of the speaker excitation signal that is adapted to a current state inside the vehicle based on a real-time distance of the secondary channel inside the vehicle and the environmental information inside the vehicle, so as to better cancel out the noise inside the vehicle, avoid the situation where the noise reduction effect decreases and the noise reduction effect is unstable due to changes in the distance of the secondary channel and changes in the environment such as temperature and humidity inside the vehicle, and improve the noise reduction effect and the system robustness.

In another embodiment of the present application, an active noise reduction method inside a vehicle is further provided, the active noise reduction method inside the vehicle can be applied to the controller of the aforementioned embodiment, as shown in FIG. 2, including:
S101, obtaining relative position information and environmental information inside the vehicle, where the relative position information is used to determine distance information of a secondary channel.

The controller can obtain the relative position information from the distance collection module, and obtain the environmental information from the environmental collection module.

S102, obtaining a noise reduction reference signal of a noise excitation source inside the vehicle and an error microphone signal of a target noise reduction area.

The controller can obtain the noise reduction reference signal from the noise reduction reference signal collection module, and obtains the error microphone signal from the error microphone array.

S103, generating a speaker excitation signal based on the noise reduction reference signal, the error microphone signal, the distance information, and the environmental information, and outputting the speaker excitation signal.

The embodiment of the present application, by obtaining the distance of the secondary channel and the environmental information inside the vehicle, generating the speaker excitation signal based on the distance of the secondary channel and the environmental information, and outputting the speaker excitation signal, realize the generation of the speaker excitation signal that is adapted to a current state inside the vehicle based on a real-time distance of the secondary channel inside the vehicle and the environmental information inside the vehicle, so as to better cancel out the noise inside the vehicle, avoid the situation where the noise reduction effect decreases and the noise reduction effect is unstable due to changes in the distance of the secondary channel and changes in the environment such as temperature and humidity inside the vehicle, and improve the noise reduction effect and the system robustness.

In another embodiment of the present application, S103, the generating the speaker excitation signal based on the noise reduction reference signal, the error microphone signal, the distance information, and the environmental information includes the following steps.

S201, determining a target filter coefficient based on the distance information and the environmental information.

In an embodiment of the present application, the corresponding relationship between the data range of different distance information and the data range of different environmental information with the filter coefficient can be pre-set. In this step, the data range where the distance information is located and the data range where the environmental information is located can be determined; and then, the corresponding filter coefficient, that is, the target filter coefficient, can be queried in the corresponding relationship based on the data range where the distance information is located and the data range where the environmental information is located.

S202, processing the noise reduction reference signal and the error microphone signal based on the target filter coefficient to obtain the speaker excitation signal, and outputting the speaker excitation signal.

The embodiment of the present application can select a filter coefficient that better matches the current state inside the vehicle as the target filter coefficient based on the real-time distance information and environmental information, process the noise reduction reference signal and the error microphone signal using the target filter coefficient to obtain and output the speaker excitation signal, realizing the online identification of the state inside the vehicle based on the real-time distance of the secondary channel inside the vehicle and the environmental information inside the vehicle; and then select the corresponding transfer function of the secondary channel to convert it into the target filter coefficient, achieving real-time automatic updating of the target filter coefficient following changes in the distance of the secondary channel and the environmental information inside the vehicle, adapting to changes in the transfer function of the secondary channel inside the vehicle, and the controller performs noise reduction processing based on the target filter coefficient, avoiding the situation where the noise reduction effect decreases and the noise reduction effect is unstable due to changes in the distance of the secondary channel and changes in the environment such as temperature and humidity inside the vehicle, and improving the noise reduction effect and the system robustness.

In another embodiment of the present application, S201, the determining a target filter coefficient based on the distance information and the environmental information includes the following steps.

S301, determining temperature information and humidity information based on the environmental information.

In an embodiment of the present application, the environmental information includes temperature information and humidity information, so the temperature information and the humidity information can be extracted from the environmental information.

S302, determining the target filter coefficient based on the distance information, the temperature information, and the humidity information.

In this step, it can determine a preset distance data range corresponding to the distance information, determine a preset temperature data range corresponding to the temperature information, determine a preset humidity data range corresponding to the humidity information, and determine a filter coefficient corresponding to the preset distance data range, the preset temperature data range, and the preset humidity data range as the target filter coefficient.

In an embodiment of the present application, the transfer function of the secondary channel can be tested offline in advance based on the three parameters of the distance information of the secondary channel, the temperature information and humidity information inside the vehicle in different combinations of the parameter segments, and be converted into a filter coefficient array for storage in the controller.

In an implementation of the present application, it can obtain a movement distance of a seat towards a front of the vehicle, a movement distance of the seat towards a roof of the vehicle, and an angle of a seat back as the relative position information; and determine the distance information of the secondary channel based on the movement distance of the seat towards the front of the vehicle, the movement distance of the seat towards the roof of the vehicle, and the angle of the seat back.

It can be seen that the distance information is determined based on the relative position information, where the relative position information includes the movement distance of the seat towards the front of the vehicle, the movement distance of the seat towards the roof of the vehicle, and the angle of the seat back. Therefore, in an offline state, a single factor experiment can be conducted on five parameters: the movement distance of the seat towards the front of the vehicle, the movement distance of the seat towards the roof of the vehicle, the angle of the seat back, the temperature inside the vehicle and the humidity inside the vehicle, to determine a change rule of the transfer function corresponding to each parameter, and to determine a segmentation range and segmentation number of the parameter. When conducting the single factor experiment on each parameter, an intermediate values is taken for the remaining parameters. According to a result of the single factor experiment, the transfer function is measured according to different combinations of segmented parameters, and be converted into the filter coefficient for storage in the controller of the ANC system. The parameter value measured each time is the intermediate value of each parameter segment, and the measurement manner is shown in Table 1.

**Table 1 Test table of segmented parameter combination**

| Measurement number | X(mm) | Y(mm) | Z(° ) | Temperature inside the vehicle (°C) | Humidity inside the vehicle (%) |
|---|---|---|---|---|---|
| 1 | Segmentation 1 | Segmentation 1 | Segmentation 1 | Segmentation 1 | Segmentation 1 |
| 2 | Segmentation 2 | Segmentation 1 | Segmentation 1 ... | Segmentation 1 | Segmentation 1 |
| a | Segmentation a | Segmentation 1 | Segmentation 1 | Segmentation 1 | Segmentation 1 |
| a+1 | Segmentation a | Segmentation 2 | Segmentation 1 ... | Segmentation 1 | Segmentation 1 |
| a+b | Segmentation a | Segmentation b | Segmentation 1 ... | Segmentation 1 | Segmentation 1 |
| a*b*c*d*e | Segmentation a | Segmentation b | Segmentation c | Segmentation d | Segmentation e |

The embodiment of the present application can select a filter coefficient that better matches the current state inside the vehicle as the target filter coefficient based on the real-time distance information, the temperature information and the humidity information, process the noise reduction reference signal and the error microphone signal using the target filter coefficient to obtain and output the speaker excitation signal. The present application identifies the state inside the vehicle online based on the real-time distance of the secondary channel inside the vehicle and the environmental information inside the vehicle; and then selects the corresponding transfer function of the secondary channel to convert it into the target filter coefficient, achieving real-time automatic updating of the target filter coefficient following changes in the distance of the secondary channel and the environmental information inside the vehicle, adapting to changes in the transfer function of the secondary channel inside the vehicle, and the controller performs noise reduction processing based on the target filter coefficient, avoiding the situation where the noise reduction effect decreases and the noise reduction effect is unstable due to changes in the distance of the secondary channel and changes in the environment such as temperature and humidity inside the vehicle, and improving the noise reduction effect and the system robustness.

In an implementation of the present application, the method further includes the following steps.

S401: obtaining current vehicle status information.

The controller can obtain the vehicle status information through a CAN bus, and the vehicle status information includes engine speed, vehicle speed, accelerator pedal position, gear, window lifting, door opening and closing, and other information.

S402, if the vehicle status information satisfies a noise reduction triggering condition, performing the step of obtaining the relative position information and the environmental information inside the vehicle.

Obtaining the vehicle status information can be used to determine whether to turn on the active noise reduction inside the vehicle, and determine whether a specified parameter in the vehicle status information meets a noise reduction triggering condition. For example, the active noise reduction inside the vehicle can be turned off when a window is open and/or a door is open, and the active noise reduction inside the vehicle can be turned on when the window is closed and/or the door is closed, that is, it is started to perform the step of S101, obtaining the relative position information and the environmental information inside the vehicle.

S202, the processing the noise reduction reference signal and the error microphone signal based on the target filter coefficient to obtain the speaker excitation signal includes:
S501, inputting the vehicle status information into an active noise reduction algorithm; and
S502, processing the noise reduction reference signal and the error microphone signal based on the active noise reduction algorithm and the target filter coefficient to obtain the speaker excitation signal.

In this step, the active noise reduction algorithm can be run to process the noise reduction reference signal and the error microphone signal using the target filter coefficient to obtain the speaker excitation signal.

The embodiment of the present application can determine whether to turn on the active noise reduction based on the real-time vehicle status information, and perform active noise reduction based on the real-time vehicle status information, achieving the automatic turn-on of the active noise reduction inside the vehicle and the more accurate active noise reduction inside the vehicle based on real-time vehicle status information, improving the noise reduction effect and the system robustness.

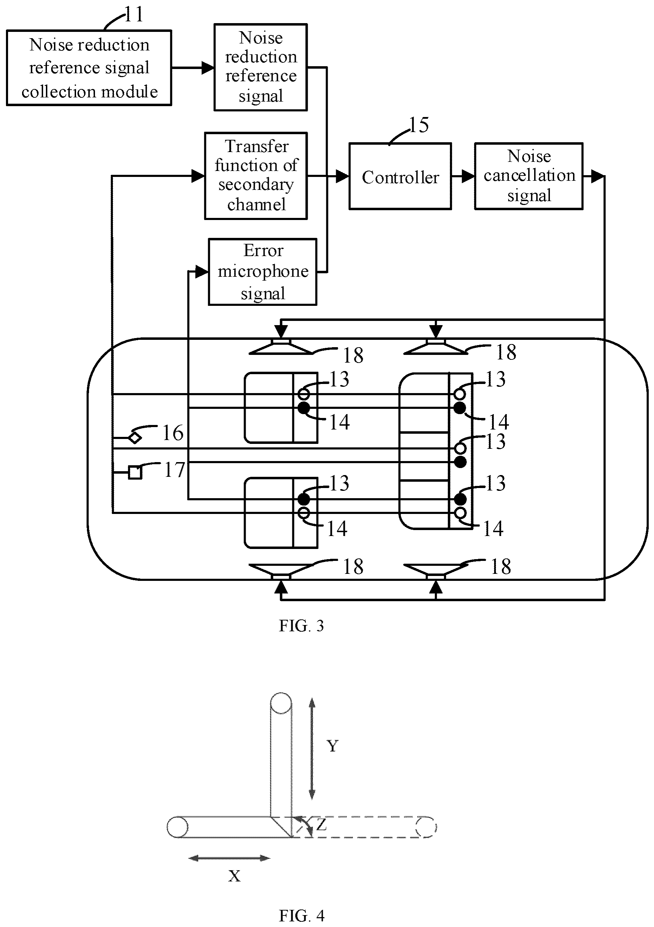

For ease of understanding, in another embodiment of the present application, an embodiment in a practical application is also provided as follows:
Taking active noise reduction of an engine on a certain fuel powered small car as an example, an active noise reduction system inside a vehicle is established, as shown in FIG. 3. The controller 15 obtains the vehicle status information through the CAN bus, such as engine speed signal, gear signal, and window and door status, etc. The reference signal adopts the engine speed signal and gear signal of the vehicle. The error microphone array 14 collects a noise signal of a target area. As shown in FIG. 4, the distance collection module 13 detects a movement distance X of a seat towards a front of the vehicle, a movement distance Y of the seat towards a roof of the vehicle, and an angle Z of a seat back. The temperature sensor 16 and the humidity sensor 17 in the environmental collection module 14 detect the temperature and humidity information inside the vehicle. The above information is input into the controller to calculate the excitation signal of the speaker array 18, and transmit it to the speaker array 18 after passing through the digital-to-analog converter in the controller to produce sound. After the excitation signal superimposes with the original noise in the target area, the noise reduction function is achieved.

In this instance, there are 5 error microphone arrays installed in the seat of the driver, which are respectively the seat of the front passenger, the seat of the rear right, the seat of the rear center, and the right ear of the rear left passenger. There are 4 speaker arrays, using 4 door speakers.

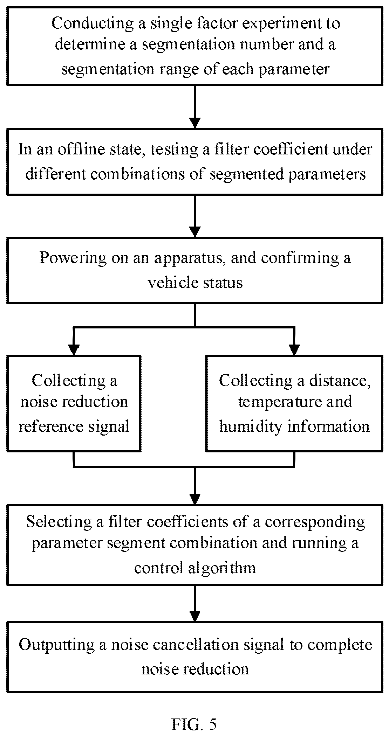

As shown in FIG. 5, the specific implementation process is as follows.
1. In an offline state, a single factor experiment is conducted on five parameters corresponding to 20 secondary channels, which are X, Y, Z, the temperature inside the vehicle and the humidity inside the vehicle, to determine a change rule of the transfer function corresponding to each parameter, and to determine a segmentation range and a segmentation number of the parameter. The value range for each parameter is shown in Table 2.

**Table 2 Value range of each parameter**

| Parameter | X(mm) | Y(mm) | Z(° ) | Temperature inside the vehicle (°C) | Humidity inside the vehicle (%) |
|---|---|---|---|---|---|
| Range | -120~120 | -50~50 | 0~120 | -40~60 | 10~90 |

According to a result of the single factor experiment, the transfer function is measured according to different combinations of segmented parameters, and be converted into the filter coefficient for storage in the controller of the ANC system. The value of each segmented parameter is based on the distance between the error microphone array on the driver's seat and the speaker on the left front door, as shown in Table 3.

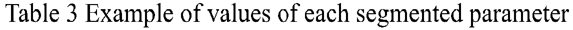

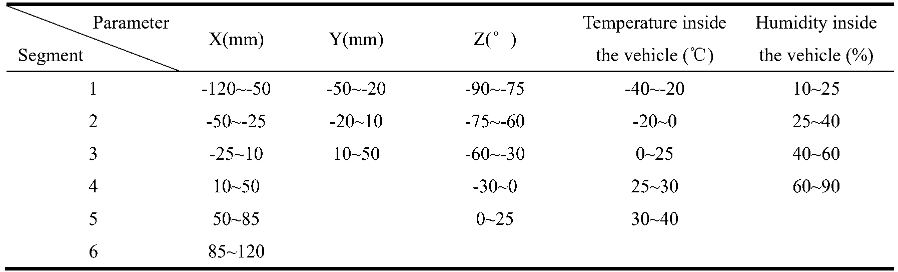

The error microphone array on the rear seat cannot be moved, and the distance of its secondary channel is taken as a fixed value.

2. After the apparatus is powered on, the controller confirms the on/off status of the doors and windows of the vehicle through the CAN bus, and if the doors and windows are closed, runs the active control system.

3. The distance sensor, the temperature sensor, and the humidity sensor respectively collect the real-time information such as the distance of each secondary channel, the temperature and humidity inside the vehicle. The active controller selects a filter coefficient under the corresponding segmented parameter combination based on the above information.

4. The controller obtains the engine speed signal and the gear signal as the noise reduction reference signal through the CAN bus (in this example, the noise excitation source inside the vehicle is taken as the engine noise), collects the noise signal of the target area through the error microphone, and runs the active noise reduction control algorithm, and outputs the speaker excitation signal.

5. The speaker outputs a noise cancellation signal and performs noise cancellation in the target area to achieve noise reduction.

6. At the next moment, steps 3-6 are repeated until the apparatus is powered off or the doors and windows are turned on.

To verify the above active noise reduction method inside the vehicle, this method is compared with an active noise reduction method inside a vehicle in an offline modeling manner. The parameter ranges during offline modeling and testing are shown in Table 4.

**Table 4 Comparison of parameter combination ranges during offline modeling and effect verification**

| | X(mm) | Y(mm) | Z(° ) | Temperature inside the vehicle (°C) | Humidity inside the vehicle (%) |
|---|---|---|---|---|---|
| Range of parameter combinations during offline modeling | 0 | 0 | 90 | 20 | 30 |
| Range of parameter combinations during effect verification | -200 | 50 | 45 | 15 | 60 |

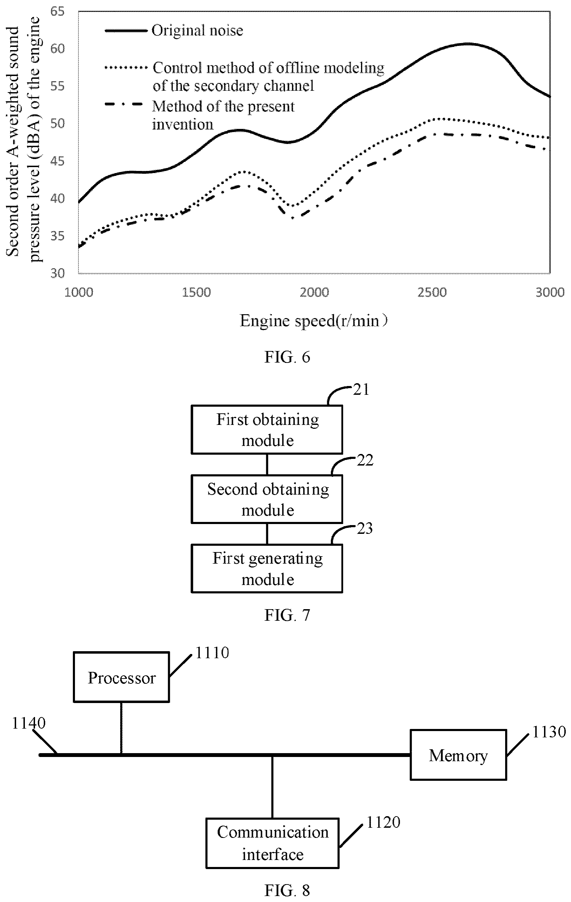

Example of the distance of the secondary channel is the distance between the error microphone on the driver's seat and the speaker on the left front door. The second-order noise reduction effect of the two control methods for the engine is shown in FIG. 6. From FIG. 6, it can be seen that the two control methods can achieve noise reduction for the second-order noise of the engine under this acceleration condition. However, compared with the control method of offline modeling of the secondary channel, when the transfer function of the secondary channel changes, the present application has better noise reduction effect.

In another embodiment of the present application, an active noise reduction apparatus inside a vehicle is also provided, as shown in FIG. 7, including:
a first obtaining module 21, configured to obtain relative position information and environmental information inside the vehicle, where the relative position information is used to determine distance information of a secondary channel;
a second obtaining module 22, configured to obtain a noise reduction reference signal of a noise excitation source inside the vehicle and an error microphone signal of a target noise reduction area; and
a first generating module 23, configured to generate a speaker excitation signal based on the noise reduction reference signal, the error microphone signal, the distance information, and the environmental information, and output the speaker excitation signal.

Optionally, the first generating module includes:
a first determining unit, configured to determine a target filter coefficient based on the distance information and the environmental information; and
a first processing unit, configured to process the noise reduction reference signal and the error microphone signal based on the target filter coefficient to obtain the speaker excitation signal, and output the speaker excitation signal.

Optionally, the first determining unit includes:
a first determining subunit, configured to determine temperature information and humidity information based on the environmental information; and
a second determining subunit, configured to determine the target filter coefficient based on the distance information, the temperature information, and the humidity information.

Optionally, the second determining subunit includes:
determining a preset distance data range corresponding to the distance information;
determining a preset temperature data range corresponding to the temperature information;
determining a preset humidity data range corresponding to the humidity information; and
determining a filter coefficient corresponding to the preset distance data range, the preset temperature data range, and the preset humidity data range as the target filter coefficient.

Optionally, the apparatus further includes:
a third obtaining module, configured to obtain current vehicle status information; and
a performing module, configured to, if the vehicle status information satisfies a noise reduction triggering condition, perform the step of obtaining the relative position information and the environmental information inside the vehicle;
the first processing unit includes:
   an input subunit, configured to input the vehicle status information into an active noise reduction algorithm; and
   a processing subunit, configured to process the noise reduction reference signal and the error microphone signal based on the active noise reduction algorithm and the target filter coefficient to obtain the speaker excitation signal.

Optionally, the apparatus further includes:
a fourth obtaining module, configured to obtain a movement distance of a seat towards a front of the vehicle, a movement distance of the seat towards a roof of the vehicle, and an angle of a seat back as the relative position information; and
a determining module, configured to determine the distance information of the secondary channel based on the movement distance of the seat towards the front of the vehicle, the movement distance of the seat towards the roof of the vehicle, and the angle of the seat back.

In another embodiment of the present application, a controller is provided, which includes a processor, a communication interface, a memory, and a communication bus, where the processor, the communication interface, and the memory communicate with each other through the communication bus;
the memory is configured to store computer programs;
the processor is configured to, when executing the programs stored in the memory, implement the active noise reduction method inside the vehicle as described in any one of the aforementioned method embodiments.

In an electronic device provided in an embodiment of the present application, a processor executes the programs stored on a memory to obtain a distance of a secondary channel and environmental information inside a vehicle, generate a speaker excitation signal based on the distance of the secondary channel and the environmental information, and output a speaker excitation signal, which realize the generation of the speaker excitation signal that is adapted to a current state inside the vehicle based on a real-time distance of the secondary channel inside the vehicle and the environmental information inside the vehicle, so as to better cancel out the noise inside the vehicle, avoid the situation where the noise reduction effect decreases and the noise reduction effect is unstable due to changes in the distance of the secondary channel and changes in the environment such as temperature and humidity inside the vehicle, and improve the noise reduction effect and the system robustness.

A communication bus 1140 mentioned in the above electronic device can be a peripheral component interconnect (Peripheral Component Interconnect, PCI) bus or an extended industry standard architecture (Extended Industry Standard Architecture, EISA) bus, etc. The communication bus 1140 can be divided into an address bus, a data bus, a control bus, etc. For ease of representation, only one thick line is used in FIG. 8, but it does not indicate that there is only one bus or one type of bus.

The communication interface 1120 is used for communication between the aforementioned electronic device and other devices.

The memory 1130 may include a random access memory (Random Access Memory, RAM) or a non-volatile memory (non-volatile memory), such as at least one disk storage. Optionally, the memory can also be at least one storage apparatus located remotely from the aforementioned processor.

The abovementioned processor 1110 can be a general-purpose processor, including a central processing unit (Central Processing Unit, CPU), a network processor (Network Processor, NP), etc. It can also be a digital signal processing (Digital Signal Processing, DSP), an application specific integrated circuit (Application Specific Integrated Circuit, ASIC), a field programmable gate array (Field Programmable Gate Array, FPGA), or other programmable logic devices, discrete gates or transistor logic devices, or discrete hardware components.

In another embodiment of the present application, a computer-readable storage medium is further provided, which stores programs for an active noise reduction method inside the vehicle, when the programs of the active noise reduction method inside the vehicle are executed by a processor, the steps of the active noise reduction method inside the vehicle as described in any one of the aforementioned method embodiments are implemented.

The present application further provides a computer program product, including computer programs which, when executed by a processor, implement the steps of any of the active noise reduction method inside the vehicle as described above.

It should be noted that in this article, relational terms such as "first" and "second" are merely used to distinguish one entity or operation from another, and do not necessarily require or imply any actual relationship or sequence among these entities or operations. Moreover, the terms "include", "comprise", or any other variation thereof are intended to encompass non-exclusive inclusion, such that a process, method, item, or device that includes a series of elements includes not only those elements, but also other elements that are not explicitly listed, or elements inherent to such process, method, item, or device. Without further limitations, the fact that an element is defined by the phrase "including a ......" does not exclude the existence of another identical element in the process, method, article or apparatus including this element.

The above description is only a specific implementation of the present application, which enables those skilled in the art to understand or implement the present application. Various modifications to these embodiments will be apparent to those skilled in the art, and the general principles defined herein can be implemented in other embodiments without departing from the spirit or scope of the present application. Therefore, the present application will not be limited to the embodiments shown herein, but will be within the widest scope consistent with the principles and novel features disclosed herein.

## Claims

1. An active noise reduction system inside a vehicle, comprising: a noise reduction reference signal collection module, an error microphone array, a distance collection module, an environmental collection module, and a controller;
the noise reduction reference signal collection module is configured to collect a noise reduction reference signal of a noise excitation source inside the vehicle;
the error microphone array is configured to collect an error microphone signal of a target noise reduction area;
the distance collection module is configured to collect relative position information, wherein the relative position information is used to determine distance information of a secondary channel;
the environmental collection module is configured to collect environmental information inside the vehicle;
the controller is configured to generate a speaker excitation signal based on the noise reduction reference signal, the error microphone signal, the distance information, and the environmental information, and output the speaker excitation signal.

2. The active noise reduction system inside the vehicle according to claim 1, wherein the environmental collection module comprises: a temperature sensor and a humidity sensor;
the temperature sensor is configured to collect temperature information inside the vehicle;
the humidity sensor is configured to collect humidity information inside the vehicle.

3. The active noise reduction system inside the vehicle according to claim 1, wherein the distance collection module is further configured to collect a movement distance of a seat towards a front of the vehicle, a movement distance of the seat towards a roof of the vehicle, and an angle of a seat back as the relative position information;
the controller is further configured to determine the distance information of the secondary channel based on the movement distance of the seat towards the front of the vehicle, the movement distance of the seat towards the roof of the vehicle, and the angle of the seat back.

4. The active noise reduction system inside the vehicle according to claim 1, wherein the controller is further configured to obtain current vehicle status information from a CAN bus.

5. An active noise reduction method inside a vehicle, comprising:
obtaining relative position information and environmental information inside the vehicle, wherein the relative position information is used to determine distance information of a secondary channel;
obtaining a noise reduction reference signal of a noise excitation source inside the vehicle and an error microphone signal of a target noise reduction area; and
generating a speaker excitation signal based on the noise reduction reference signal, the error microphone signal, the distance information, and the environmental information, and outputting the speaker excitation signal.

6. The active noise reduction method inside the vehicle according to claim 5, wherein the generating the speaker excitation signal based on the noise reduction reference signal, the error microphone signal, the distance information, and the environmental information comprises:
determining a target filter coefficient based on the distance information and the environmental information; and
processing the noise reduction reference signal and the error microphone signal based on the target filter coefficient to obtain the speaker excitation signal, and outputting the speaker excitation signal.

7. The active noise reduction method inside the vehicle according to claim 6, wherein the determining the target filter coefficient based on the distance information and the environmental information comprises:
determining temperature information and humidity information based on the environmental information; and
determining the target filter coefficient based on the distance information, the temperature information, and the humidity information.

8. The active noise reduction method inside the vehicle according to claim 7, wherein the determining the target filter coefficient based on the distance information, the temperature information, and the humidity information comprises:
determining a preset distance data range corresponding to the distance information;
determining a preset temperature data range corresponding to the temperature information;
determining a preset humidity data range corresponding to the humidity information; and
determining a filter coefficient corresponding to the preset distance data range, the preset temperature data range, and the preset humidity data range as the target filter coefficient.

9. The active noise reduction method inside the vehicle according to claim 6, further comprising:
obtaining current vehicle status information; and
if the vehicle status information satisfies a noise reduction triggering condition, performing the step of obtaining the relative position information and the environmental information inside the vehicle;
the processing the noise reduction reference signal and the error microphone signal based on the target filter coefficient to obtain the speaker excitation signal comprises:
inputting the vehicle status information into an active noise reduction algorithm; and
processing the noise reduction reference signal and the error microphone signal based on the active noise reduction algorithm and the target filter coefficient to obtain the speaker excitation signal.

10. The active noise reduction method inside the vehicle according to claim 5, further comprising:
obtaining a movement distance of a seat towards a front of the vehicle, a movement distance of the seat towards a roof of the vehicle, and an angle of a seat back as the relative position information; and
determining the distance information of the secondary channel based on the movement distance of the seat towards the front of the vehicle, the movement distance of the seat towards the roof of the vehicle, and the angle of the seat back.

11. An active noise reduction apparatus inside a vehicle, comprising:
a first obtaining module, configured to obtain relative position information and environmental information inside the vehicle, wherein the relative position information is used to determine distance information of a secondary channel;
a second obtaining module, configured to obtain a noise reduction reference signal of a noise excitation source inside the vehicle and an error microphone signal of a target noise reduction area; and
a first generating module, configured to generate a speaker excitation signal based on the noise reduction reference signal, the error microphone signal, the distance information, and the environmental information, and output the speaker excitation signal.

12. A controller, comprising a processor, a communication interface, a memory, and a communication bus, wherein the processor, the communication interface, and the memory communicate with each other through the communication bus;
the memory is configured to store computer programs;
the processor is configured to, when executing the programs stored in the memory, implement the active noise reduction method inside the vehicle according to any one of claims 5 to 10.

13. A computer-readable storage medium, storing programs for an active noise reduction method inside a vehicle which, when executed by a processor, implements steps of the active noise reduction method inside the vehicle according to any one of claims 5 to 10.

14. A computer program product, comprising computer programs which, when executed by a processor, implement steps of the active noise reduction method inside the vehicle according to any one of claims 5 to 10.
